# EUROPEAN PATENT SPECIFICATION

(11) **EP 3 342 776 B1**
(45) Date of publication and mention of the grant of the patent: **30.09.2020**
(21) Application number: 16839162.1
(22) Date of filing: 17.08.2016
(51) Int. Cl.: C07F 7/18, C08K 9/06, C08L 101/00, C09C 3/12, C08K 3/04, C08K 3/36

(54) **SULFUR CONTAINING ORGANOSILICON COMPOUND AND RESIN COMPOSITION**
SCHWEFELHALTIGE ORGANOSILICIUMVERBINDUNG UND HARZZUSAMMENSETZUNG
COMPOSÉ D'ORGANOSILICIUM CONTENANT DU SOUFRE ET COMPOSITION DE RÉSINE

(30) Priority: 27.08.2015 JP 2015167339
(43) Date of publication of application: 04.07.2018
(73) Proprietor: Kuraray Co., Ltd., Okayama 710-0801 (JP)
(72) Inventor: SATO, Junko, Tainai-shi Niigata 959-2691 (JP); TSURUTA, Takuo, Tainai-shi Niigata 959-2691 (JP)
(74) Representative: Müller-Boré & Partner Patentanwälte PartG mbB
(86) International application number: PCT/JP2016/074030
(87) International publication number: WO 2017/033815

(56) References cited:
- GB-A- 1 439 247
- JP-A- S5 031
- JP-A- S 535 124
- JP-A- S5 093 835
- JP-A- H04 217 689

## Description

### Technical Field

The present invention relates to a novel organosilicon compound and a resin composition. In more detail, the present invention relates to a sulfur-containing organosilicon compound having an alkyl group at the β-position of a silyl group and a resin composition containing an inorganic filling material which is subjected to a surface treatment with the foregoing organosilicon compound.

### Background Art

In order to improve dimensional stability, mechanical strength, heat resistance, and so on of resin molded bodies, the addition of an inorganic filling material inclusive of a glass fiber to the resin is widely conducted. However, it cannot be always said that adhesion of the inorganic filling material to the resin is sufficient, and the surface treatment of the inorganic filling material with a silane coupling agent is proposed.

The silane coupling agent is typically a compound in which a hydrolyzable group, such as a methoxy group, an ethoxy group, etc., and an organic functional group, such as an amino group, an epoxy group, etc., are bound with a silicon atom, and examples thereof include vinyltrimethoxysilane, vinyltriethoxysilane, γ-glycidoxypropyltrimethoxysilane, γ-methacryloxypropyltrimethoxysilane, γ-acryloxypropyltrimethoxysilane, γ-aminopropyltrimethoxysilane, γ-mercaptopropyltrimethoxysilane, γ-ureidopropyltrimethoxysilane, bis(triethoxysilylpropyl)tetrasulfide, γ-isocyanatopropyltrimethoxysilane, tris(trimethoxysilylpropyl)isocyanurate, and the like.

The hydrolyzable group of the silane coupling agent is hydrolyzed with moisture in a solution or air, adsorbed moisture of the surface of an inorganic material (hereinafter referred to as "inorganic material surface"), or the like and converted to a hydroxy group, and an oligomer is formed by intermolecular dehydration condensation. The excessive hydroxy group of the oligomer forms a hydrogen bond together with the hydroxy group of the inorganic filling material surface, and the oligomer is bound with the inorganic material. Thereafter, dehydration/condensation is generated by a heat drying treatment or the like, whereby an inorganic filling material in which the silane coupling agent oligomer is firmly chemically bound on the surface thereof is obtained. The thus surface-treated inorganic filling material is widely used as a reinforcing material of a thermosetting resin, such as an epoxy resin, etc., or a thermoplastic resin, such as a polyamide resin, a polyester resin, a polypropylene resin, etc.

Among silane coupling agents, a sulfur-containing silane coupling agent, such as γ-mercaptopropyltrimethoxysilane, bis(triethoxysilylpropyl)tetrasulfide, etc., is also suitably applicable to, in addition to the aforementioned thermoplastic resin or thermosetting resin, elastomers or rubbers, such as a urethane rubber, a polysulfide, a styrene butadiene rubber (SBR), a nitrile rubber, a vulcanized ethylene propylene monomer (EPM), etc., and so on.

In particular, it is known that in the case where an inorganic filling material chemically treated with a sulfur-containing silane coupling agent is added to a sulfur vulcanization-based elastomer (vulcanized EPM, etc.), various physical properties of the elastomer are largely improved. In addition, in an application to a tire or the like, such is also useful for an improvement of dispersibility or strength of a silica-based filling material.

However, under a high-temperature high-humidity use condition, the matter that the inorganic filling material and the resin are separated from each other due to hydrolysis of the silane coupling agent layer, so that the strength of a molded body is worsened is regarded as a problem, and a silane coupling agent having excellent hydrolysis resistance is proposed. Examples thereof include a long-chain spacer type silane coupling agent (see PTL 1) and an aromatic ring type silane coupling agent (see PTL 2).

Moreover, PTL 3 discloses the use of reinforcing additives for rubber mixtures containing silica or silicate fillers, wherein said additives belong to the group of sulphur containing organosilicon compounds.

### Citation List

### Patent Literature

PTL 1: JP 4-217689 A
PTL 2: JP 50-93835 A
PTL 3: GB 1,439,247

### Summary of Invention

### Technical Problem

However, according to investigations made by the present inventors, in the case of using the silane coupling agent described in each of the aforementioned literatures, though the hydrolysis resistance of the silane coupling agent layer is improved, there was encountered a problem in the dispersibility of the inorganic filling material, and for example, in a tire application, there was room for improvement from the viewpoints of improvement of rubber strength, reduction of hysteresis loss, and improvement of abrasion resistance.

Thus, an object of the present invention is to provide an organosilicon compound which when used as a silane coupling agent for surface treatment of an inorganic filling material to be added to a resin, is excellent in dispersibility of the inorganic filling material in the resin as well as hydrolysis resistance of a silane coupling agent layer.

### Solution to Problem

As a result of extensive and intensive investigations made by the present inventors, it has been found that the aforementioned problem can be solved by a sulfur-containing organosilicon compound having an alkyl group at the β-position of a silyl group, thereby leading to accomplishment of the present invention.

Specifically, the present invention provides the following [1] to [4].
[1] An organosilicon compound represented by the following general formula (I): 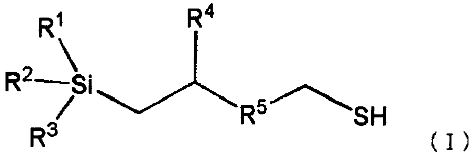 wherein R¹ to R³ each independently represent a chlorine atom, a methoxy group, or an ethoxy group; R⁴ represents an alkyl group having 1 to 10 carbon atoms; and R⁵ represents an alkylene group having 1 to 10 carbon atoms.
[2] An organosilicon compound represented by the following general formula (II): 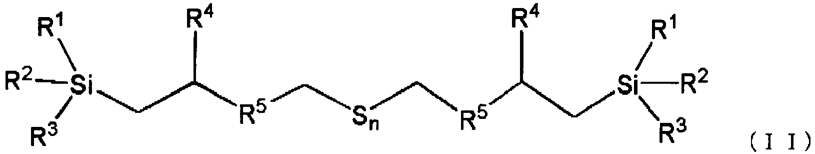 wherein R¹ to R⁵ are the same as those defined above; and n represents an integer of 2 to 6.
[3] An organosilicon compound represented by the following general formula (III): 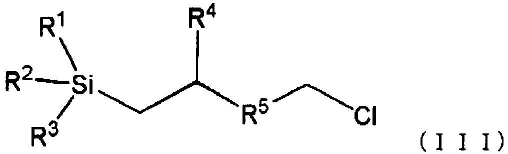 wherein R¹ to R⁵ are the same as those defined above.
[4] A resin composition containing an inorganic filling material which is subjected to a surface treatment with the organosilicon compound as set forth in [1] or [2].

### Advantageous Effects of Invention

By adding an inorganic filling material which is subjected to a surface treatment with the organosilicon compound of the present invention and undergoing molding, it is possible to provide a molded body which is favorable in dispersibility of the inorganic filling material and excellent in hydrolysis resistance of a silane coupling agent layer.

### Description of Embodiments

### [Organosilicon Compound]

The organosilicon compounds represented by the general formula (I) and general formula (II) of the present invention (hereinafter referred to as "compound (I)" and "compound (II)", respectively) are hereunder described.

R¹ to R³ each independently represent a chlorine atom, a methoxy group, or an ethoxy group. Of these, a methoxy group or an ethoxy group is preferred.

R⁴ represents an alkyl group having 1 to 10 carbon atoms. The alkyl group represented by R⁴ is not limited to be linear, and it may also be branched or cyclic or may be of a structure in which a linear and/or branched structure is bound with a cyclic structure.

Examples of the alkyl group having 1 to 10 carbon atoms represented by R⁴ include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a n-heptyl group, a n-octyl group, a 2-ethylhexyl group, a cyclopropyl group, a cyclobutyl group, a cyclopentyl group, a cyclohexyl group, a cycloheptanyl group, a cyclooctanyl group, and the like. Above all, an alkyl group having 1 to 6 carbon atoms is preferred; an alkyl group having 1 to 3 carbon atoms is more preferred; a methyl group or an ethyl group is still more preferred; and a methyl group is most preferred.

R⁵ represents an alkylene group having 1 to 10 carbon atoms. The alkylene group represented by R⁵ is not limited to be linear, and it may also be branched or cyclic or may be of a structure in which a linear and/or branched structure is bound with a cyclic structure.

Examples of the alkylene group having 1 to 10 carbon atoms represented by R⁵ include a methylene group, an ethane-1,1-diyl group, an ethane-1,2-diyl group, a propane-1,1-diyl group, a propane-1,2-diyl group, a propane-1,3-diyl group, a pentane-1,5-diyl group, a hexane-1,6-diyl group, a cyclohexane-1,4-diyl group, and the like. From the viewpoint of improving mechanical strength of a molded body, an alkylene group having 1 to 5 carbon atoms is preferred; an alkylene group having 1 to 3 carbon atoms is more preferred; a methylene group or an ethylene group is still more preferred; and a methylene group is most preferred.

In the compound (I), R⁵ plays a role as a spacer between a site related to dehydration condensation following binding with the inorganic filling material and a thiol group or an -Sₙ- group that is a site related to the reaction with the resin. Here, in view of the matter that R⁵ is present as the spacer, the site related to dehydration condensation and the thiol group or -Sₙ- group reacting with the resin keep an appropriate distance, whereby the dehydration condensation is smoothly achieved.

The integer of 2 to 6 represented by n is preferably an integer of 2 to 5, more preferably an integer of 3 to 4, and still more preferably 4.

In the compound (I) and the compound (II), the carbon at the α-position of the silyl group has two hydrogen atoms, and the carbon at the β-position has at least one alkyl group. In the case where each of the compound (I) and the compound (II) acts as a silane coupling agent, R¹ to R³ each become a hydroxy group through hydrolysis, and at least one of the hydroxy groups undergoes the dehydration condensation with the hydroxy group of the inorganic material surface.

On this occasion, when an alkyl group is present in the vicinity of the silyl group, the foregoing alkyl group becomes an obstacle against an approach of water to the dehydration condensation part, and the hydrolysis of the silane coupling agent layer is suppressed.

Meanwhile, such an alkyl group may also suppress the generation of hydroxy groups to be caused due to hydrolysis of R¹ to R³, and therefore, there is a concern that the smooth binding with the inorganic filling material surface is hindered.

According to the detailed investigations made by the present inventors, it has been proven that in the case where the carbon at the α-position of the silyl group has an alkyl group, an approach of water to R¹ to R³ is excessively hindered to suppress the hydrolysis of R¹ to R³, thereby hindering the smooth binding with the inorganic filling material surface. Meanwhile, it has been proven that in the case where the carbon at each of the α-position and the β-position of the silyl group has two hydrogen atoms, and the carbon at the γ-position has an alkyl group, an effect for hindering an approach of water to the dehydration condensation part is small, and an effect for suppressing the hydrolysis of the silane coupling agent layer is small.

However, it has been found that in the case where the carbon at the α-position of the silyl group has two hydrogen atoms, and the carbon at the β-position of the silyl group has an alkyl group, the silane coupling agent layer may be smoothly introduced into the inorganic filling material surface without hindering the generation of hydroxy groups to be caused due to hydrolysis of R¹ to R³, an approach of water to the dehydration condensation part after the formation of the silane coupling agent layer is appropriately hindered, and the hydrolysis is effectively suppressed.

Furthermore, it has been found that in view of the matter that each of the compounds (I) and (II) has such an alkyl group at the β-position, the formed silane coupling agent layer becomes appropriately bulky, so that the dispersibility of the inorganic filling material is improved.

As specific examples of the compound (I), the following compounds are exemplified, but it should be construed that the compound (I) is not limited thereto.

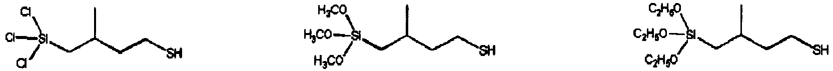

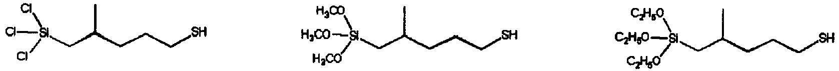

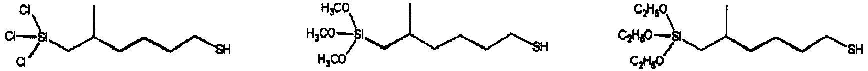

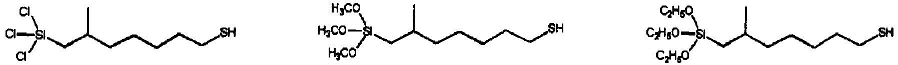

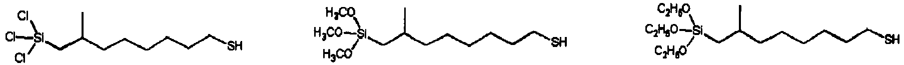

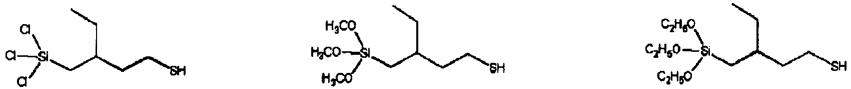

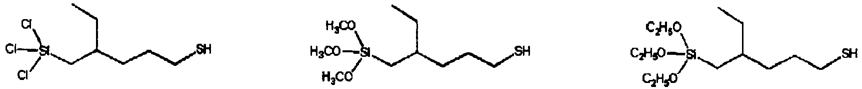

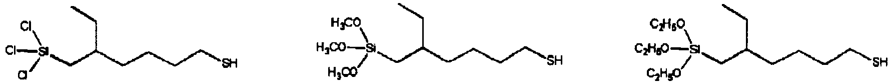

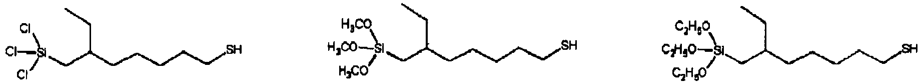

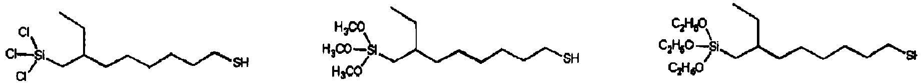

As specific examples of the compound (II), the following compounds are exemplified, but it should be construed that the compound (II) is not limited thereto.

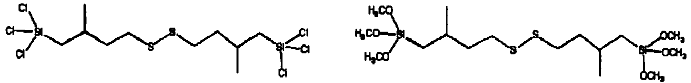

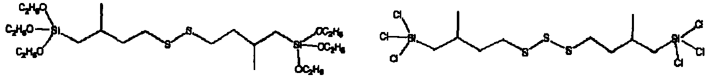

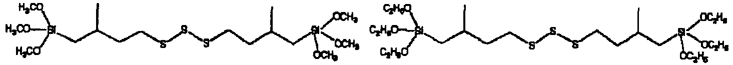

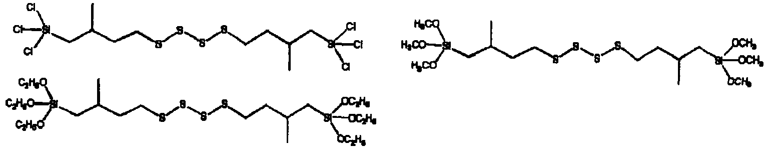

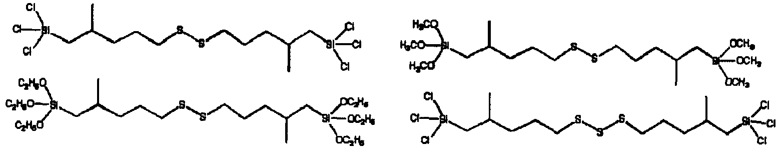

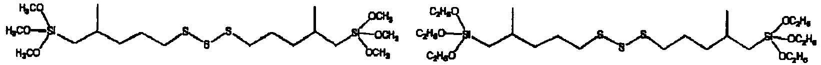

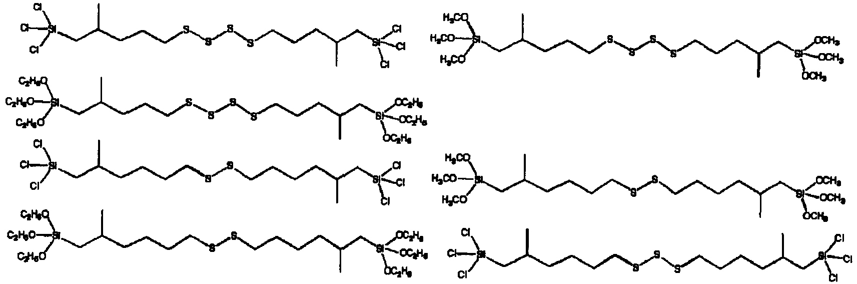

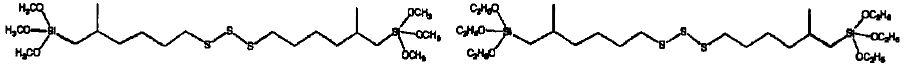

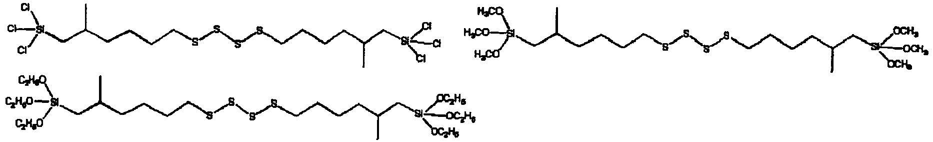

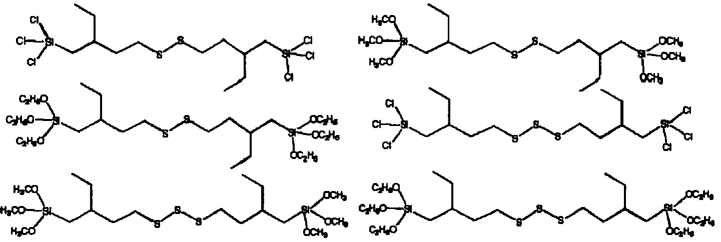

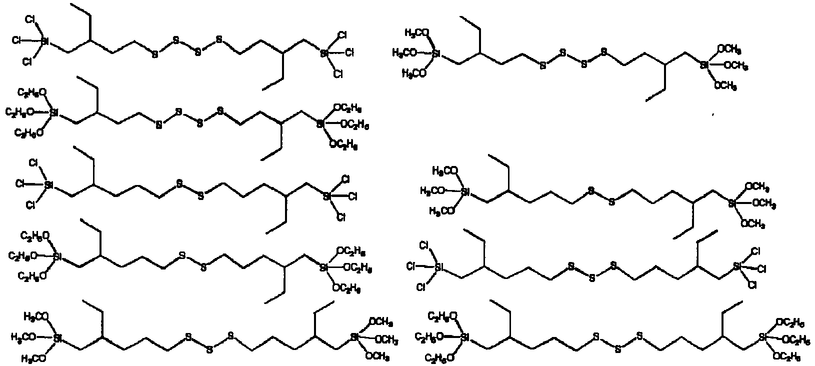

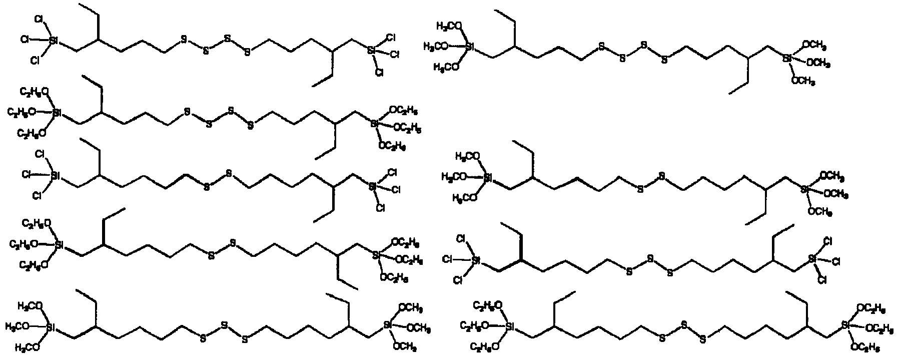

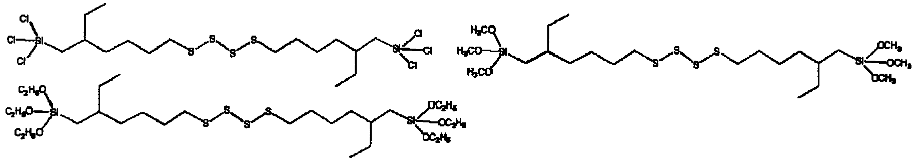

A production method of each of the compounds (I) and (II) is not particularly limited, and each of the compounds (I) and (II) may be produced through a combination of known methods. For example, the organosilicon compound represented by the general formula (III) of the present invention (hereinafter referred to as "compound (III)") that is an intermediate is first produced from an alkenyl chloride (IV) and a hydrosilane (V) (hereinafter referred to as "step 1"), and the compound (III) is then allowed to react with NaSH to obtain the compound (I) (hereinafter referred to as "step 2-1"). In addition, by using various sulfur-containing compounds, the compound (II) is obtained from the compound (III) or the compound (I) (hereinafter referred to as "step 2-2").

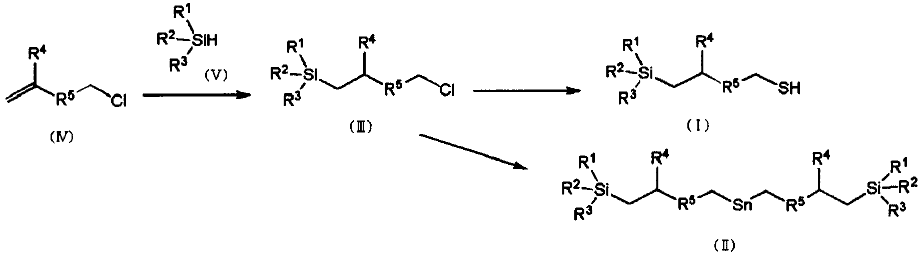

In the formulae, R¹ to R⁵ and n are the same as those defined above.

As specific examples of the compound (III), the following compounds are exemplified, but it should be construed that the compound (III) is not limited thereto.

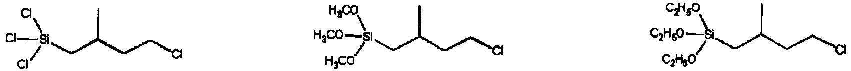

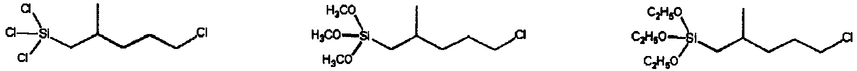

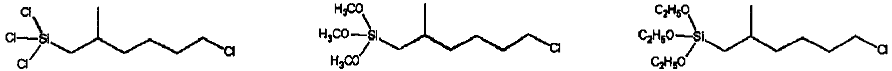

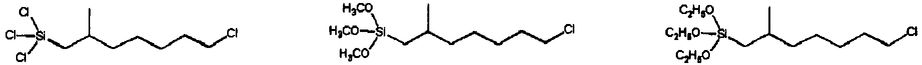

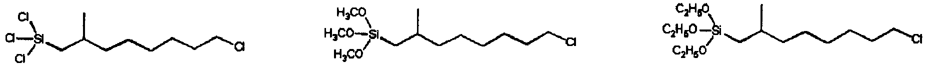

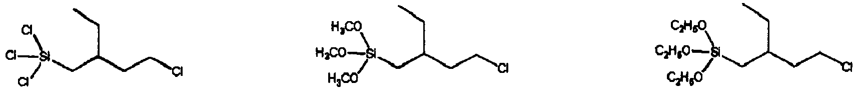

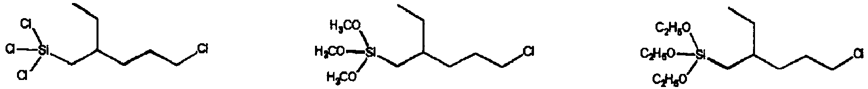

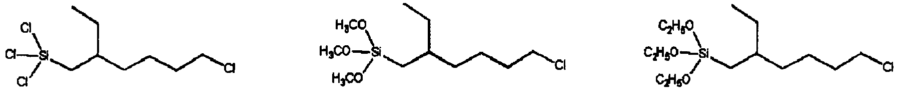

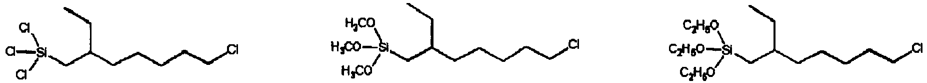

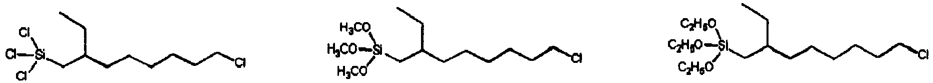

The compound (III) is also useful as an intermediate for production of, in addition to the compound (I) or the compound (II), a (meth)acrylic silane compound, an amino-based silane compound, a ureide-based silane compound, an isocyanate-based silane compound, an isocyanurate-based silane compound, or the like. Such a compound derived from the compound (III) is useful especially as a silane coupling agent.

### (Step 1)

A step 1 is a step of producing the compound (III) from the alkenyl chloride (IV) and the hydrosilane (V) in the presence of a catalyst.

As the hydrosilane (V), for example, trichlorosilane, trimethoxysilane, triethoxysilane, and so on are usable.

As the catalyst which is used in the step 1, though compounds including platinum, rhodium, or iridium are exemplified, platinum-based catalyst are preferred, and platinum chloride-based catalysts are more preferred. Specifically, examples thereof include hexachloroplatinic(IV) acid (H₂PtCl₆), a platinum chloride·unsaturated ketone complex, a platinum chloride·β-diketone complex, a platinum chloride olefin complex, and the like. Though the use amount of the platinum chloride-based catalyst is not particularly limited, it is preferably 10⁻⁶ to 10⁻² mol, and more preferably 10⁻⁵ to 10⁻² mol per mol of the alkenyl chloride (IV) serving as the raw material.

The step 1 may be carried out in the presence or absence of a solvent. The solvent which may be used is not particularly limited so long as it does not adversely affect the reaction, and examples thereof include alcohols, such as methanol, ethanol, n-propanol, isopropanol, etc.; aromatic hydrocarbons, such as benzene, toluene, xylene, etc.; aliphatic hydrocarbons, such as hexane, heptane, octane, cyclohexane, methylcyclohexane, etc.; ethers, such as diethyl ether, diisopropyl ether, tetrahydrofuran, etc.; halogenated aromatic hydrocarbons, such as chlorobenzene, fluorobenzene, etc.; halogenated aliphatic hydrocarbons, such as dichloromethane, chloroform, 1,2-dichloroethane, etc.; and the like. These may be used alone, or may be used in combination of two or more thereof. In the case of using the solvent, though its use amount is not particularly limited, in general, it is preferably 0.5 to 100 times by mass relative to the alkenyl chloride (IV) serving as the raw material, and from the viewpoint of volume efficiency, it is more preferably 1 to 10 times by mass.

In general, a reaction temperature is preferably in a range of from -10 to 100°C, and more preferably in a range of from 20 to 80°C. A reaction time is typically 0.5 hours to 48 hours.

In the compound (III), in the case where it is contemplated to obtain a compound where R¹ to R³ are each a methoxy group or an ethoxy group, the compound may also be acquired by a method of directly synthesizing the compound by using trimethoxysilane or triethoxysilane, or a method in which after reaction with trichlorosilane, the desired alkoxy body is obtained in methanol or ethanol. In the case of going through a trichloro body, for the purpose of capturing hydrogen chloride which is generated on the occasion of alkoxylation, triethylamine, pyridine, sodium carbonate, potassium carbonate, sodium methoxide, sodium ethoxide, or the like may also be made coexistent as a base. Though the use amount of the base is not particularly limited, in general, it is preferably 0.8 to 20 molar times, and more preferably 3 to 7 molar times relative to the hydrosilane (V).

Though the reaction may be carried out at atmospheric pressure or under elevated pressure, in general, it is carried out at atmospheric pressure.

The compound (III) obtained after completion of the reaction may be isolated by a method which is usually adopted in isolation/purification of an organic compound. For example, after filtering the reaction mixture, the resultant is concentrated and then purified by distillation under reduced pressure or the like, whereby the target compound (III) may be obtained. In addition, the reaction mixture may also be used for the subsequent step through direct concentration.

### (Step 2-1)

The step 2-1 is a step of allowing the compound (III) to react with NaSH to obtain the compound (I).

As NaSH, those obtained by (1) reaction between sodium methoxide and a hydrogen sulfide gas; (2) reaction between anhydrous sodium sulfide and a hydrogen sulfide gas; (3) dehydration of hydrated NaSH; or the like may be used. A simpler and easier method is a method in which a hydrated NaSH flake which is industrially inexpensively available is dehydrated and used.

Examples of the dehydration method of hydrated NaSH include (1) a method by heating under a reduced pressure condition; (2) a method by heating under an inert gas circulation condition; (3) a method of adding an organic solvent azeotropic with water to undergo azeotropic dehydration; and the like. The dehydration of NaSH is conducted for the purpose of preventing the matter that the compound (III) or the compound (I) is converted into a high-boiling point siloxane oligomer due to hydrolysis, so that the synthesis yield is remarkably lowered.

Though the use amount of NaSH is not particularly limited, it is preferably 0.8 to 2.0 mol, and more preferably 1.0 to 1.5 mol per mol of the compound (III).

The step 2-1 may be carried out in the presence or absence of a solvent. Such a solvent is not particularly limited so long as it does not adversely affect the reaction, and examples thereof include aromatic hydrocarbons, such as benzene, toluene, xylene, ethylbenzene, mesitylene, etc.; aliphatic hydrocarbons, such as hexane, heptane, octane, cyclohexane, methylcyclohexane, etc.; halogenated aromatic hydrocarbons, such as chlorobenzene, fluorobenzene, etc.; halogenated aliphatic hydrocarbons, such as dichloromethane, chloroform, 1,2-dichloroethane, etc.; ethers, such as diethyl ether, diisopropyl ether, tetrahydrofuran, etc.; alcohols, such as methanol, ethanol, etc.; aprotic polar solvents, such as dimethylformamide, acetonitrile, etc.; and the like. These may be used alone, or may be used in combination of two or more thereof. In the case of using the solvent, though its use amount is not particularly limited, in general, it is preferably 0.5 to 20 times by mass relative to the compound (III), and from the viewpoint of volume efficiency, it is more preferably 1 to 5 times by mass.

In the step 2-1, in general, a reaction temperature is preferably in a range of from 10 to 200°C, and more preferably in a range of from 20 to 150°C. In addition, it is preferred to carry out the reaction in an inert gas atmosphere of nitrogen, argon, or the like. Furthermore, the reaction may be conducted by a method either at atmospheric pressure or elevated pressure. Though a reaction time varies with the reaction condition, it is typically 1 to 100 hours.

The compound (I) obtained after completion of the reaction may be isolated by a method which is usually adopted in isolation/purification of an organic compound. For example, after filtering the reaction mixture, the resultant is concentrated and then purified by distillation under reduced pressure or the like, whereby the target sulfur-containing organosilicon compound (I) may be obtained. In the case where R¹ to R³ are each an alkoxy group, there is a possibility that the target material is cyclized due to dealcoholization reaction at the time of a distillation operation, and therefore, a measure of adding an acid, such as hydrogen chloride, acetic acid, formic acid, etc., thereby neutralizing the reaction liquid, or other measure may also be taken. In addition, even in the case where the purity of the target material is decreased due to by-production of a cyclic body, by post-adding a suitable amount of an alcohol corresponding to the alkoxy group of the target material to the target material, the cyclic body is converted into the target material, and therefore, it is possible to make the purity high.

### (Step 2-2)

The step 2-2 is a step of obtaining the compound (II) from the compound (III) or the compound (I) by using various sulfur-containing compounds.

Examples of a method which is adoptable in the step 2-2 may include (1) a method of allowing Na₂S₄ and the compound (III) to react with each other; (2) a method of allowing sodium hydrogen sulfide, sulfur, and the compound (III) to react with each other; (3) a method of allowing anhydrous sodium sulfide to react with sulfur in a polar solvent to form anhydrous sodium polysulfide and then allowing the anhydrous sodium polysulfide to react with the compound (III); (4) a method of allowing the compound (I) and sulfur to react with each other; and the like.

The aforementioned method (3) is hereunder described.

The anhydrous sodium sulfide may be, for example, obtained through dehydration of hydrated sodium sulfide by (1) a method by heating under a reduced pressure condition; (2) a method by heating under an inert gas circulation condition; (3) a method of adding an organic solvent azeotropic with water to undergo azeotropic dehydration; and the like.

The anhydrous sodium sulfide may also be obtained by using sodium methoxide and a hydrogen sulfide gas in a molar ratio of 2/1 and allowing the both to react with each other in absolute methanol.

The use amount of the anhydrous sodium sulfide is typically 0.5 mol or less, and preferably 0.45 to 0.5 mol per mol of the compound (III).

The reaction is carried out in the presence of a solvent. Though the solvent is not particularly limited so long as it does not adversely affect the reaction, a polar solvent is preferred. Examples thereof include alcohols, such as methanol, ethanol, etc.; ethers, such as tetrahydrofuran, diisopropyl ether, etc.; acetone, methyl ethyl ketone, and the like. Though the use amount of the solvent is not particularly limited, in general, it is preferably 0.5 to 200 times by mass relative to the compound (III), and from the viewpoint of volume efficiency, it is more preferably 1 to 50 times by mass.

The sulfur which is used for the reaction is usable in any mode inclusive of a powdered state, a flake state, and the like so long as it is anhydrous sulfur. The use amount of sulfur is determined by the amount of sulfur in the target compound (II). That is, for example, in the case of synthesizing 1 mol of the compound (II) by using 1 mol of anhydrous sodium sulfide, the amount of sulfur to be used may be set to (n - 1) mol.

The reaction between anhydrous sodium sulfide and sulfur may be carried out through reaction in a dry inert gas (nitrogen gas) atmosphere at a temperature ranging from 20°C to a boiling point of the solvent. It is preferred that this reaction is further continued for 1 to 10 hours after the added sulfur is fully dissolved. The anhydrous sodium polysulfide obtained by the reaction is allowed to react upon addition of the compound (III) without being isolated from the reaction mixture.

The reaction between anhydrous sodium polysulfide and the compound (III) may be carried out through reaction in a dry inert gas (nitrogen gas) atmosphere at a temperature ranging from 20°C to a boiling point of the solvent. In order to enhance the reaction rate, it is preferred to conduct the reaction under reflux of a solvent under a high temperature condition. Though a reaction time varies with the reaction condition, it is typically 1 to 100 hours.

After completion of the reaction, by cooling the reaction mixture to 30°C or lower, filtering off the formed sodium chloride, concentrating the solvent, and then purifying the resultant by distillation under reduced pressure or the like, the target compound (II) may be obtained.

The thus produced compound (I) and compound (II) each have a function as the silane coupling agent, and for the purpose of surface modification of an inorganic filler, improvement of adhesion of an adhesive, improvement of durability of a coating film, crosslinking of an organic polymer, or the like, each of the compound (I) and the compound (II) may be widely used for an adhesive, a primer, a sealant, a sealing material, a paint, a coating material, a glass fiber-reinforced resin, an inorganic filler-compounded resin, a composite reinforced resin, a printing ink, an elastomer material, a thermoplastic resin material, a composite material, an electrical insulator, and so on.

### [Resin Composition]

The resin composition of the present invention contains an inorganic filling material which is subjected to a surface treatment with the compound (I) or the compound (II). In the present specification, the term "resin" is a concept inclusive of an elastomer, too.

The inorganic filling material to be subjected to a surface treatment is not particularly limited so long as it is composed of an inorganic material which generally reacts with a silanol group to form a bond, and a shape of the inorganic filling material is not particularly limited, too. Examples of such an inorganic filling material include fillers, such as silicon, titanium, zirconium, magnesium, aluminum, indium, or tin, or a single or composite oxide thereof; glass fillers, such as a glass fiber, a glass cloth, a glass tape, a glass mat, a glass paper, etc.; silica-based filling materials; mineral-based filling materials, such as clay, mica, talc, wollastonite, etc.; metal base materials, such as iron, aluminum, etc.; and the like.

The surface treatment method of the inorganic filling material is not particularly limited. Examples thereof include a method in which the inorganic filling material is added to the resin, followed by adding thereto and mixing therewith the compound (I) or compound (II) diluted with an organic solvent, water, or the like; a method in which prior to adding the inorganic filling material to the resin, the inorganic filling material is previously treated with the compound (I) or compound (II) by a dry method or a wet method; a primer method in which the compound (I) or compound (II) diluted with an organic solvent, water, or the like is coated directly on the inorganic filling material; and the like.

In the surface treatment of the inorganic filling material, a drying treatment with heat may be followed. By conducting the drying treatment with heat, dehydration condensation between the hydroxy group of the compound (I) or compound (II) and the hydroxy group of the inorganic filling material surface proceeds, whereby firm binding may be formed.

A temperature in the drying treatment is typically 60 to 180°C, and preferably 80 to 150°C. In addition, a drying time is preferably 5 minutes to 2 hours.

Examples of the resin constituting the resin composition of the present invention include a phenol resin, an epoxy resin, polyurethane, an acrylic resin, a styrene-butadiene copolymerized rubber, a nitrile rubber, polysulfide, neoprene, a chloroprene rubber, a butyl rubber, and the like.

These resins may be used alone, or may be used in combination of two or more thereof.

The compound (I) or compound (II) is suitably usable especially for an elastomer composition.

In the case where the resin composition of the present invention is an elastomer composition for a tire application, the elastomer composition may be, for example, produced by blending a diene-based rubber, a silica-based filling material, the compound (I) or compound (II), and optionally, a rubber compounding agent which is generally used in the rubber industry.

Examples of the aforementioned diene-based rubber include a natural rubber, a polyisoprene rubber, an emulsion polymerization styrene-butadiene copolymerized rubber, a solution polymerization random styrene-butadiene rubber (styrene: 5 to 50% by weight, amount of 1,2-bond of butadiene: 10 to 80%), a high-trans styrene-butadiene rubber (trans content of butadiene: 70 to 95%), a low-cis polybutadiene rubber, a high-trans butadiene rubber (amount of trans-bond: 70 to 95%), a styrene-isoprene copolymerized rubber, a butadiene-isoprene copolymerized rubber, a solution polymerization random styrene-butadiene-isoprene copolymerized rubber, an emulsion polymerization random styrene-butadiene-isoprene copolymerized rubber, an emulsion polymerization styrene-acrylonitrile-butadiene copolymerized rubber, a high-vinyl styrene-butadiene-low-vinyl styrene-butadiene block copolymerized rubber, a polystyrene-polybutadiene-polystyrene block copolymerized rubber, and an ethylene-propylene-diene monomer copolymerized rubber. These may be suitably selected and used alone or as a blend according to the required characteristics.

Examples of the aforementioned silica-based filling material include dry process white carbon, wet process white carbon, colloidal silica, precipitated silica, and the like. Above all, wet process white carbon composed mainly of hydrated silicic acid is suitably used. Furthermore, a carbon black-silica complex in which silica is deposited on the surface of carbon black may also be suitably used.

Examples of the aforementioned rubber compounding agent include carbon black; extender oils, such as paraffin-based, naphthene-based, or aroma-based materials, etc.; anti-aging agents, such as amine-based or phenol-based materials, etc.; vulcanization aids, such as sulfur, stearic acid, zinc white, etc.; vulcanization accelerators, such as sulfenamide-based, thiuram-based, thiazole-based, dithiocarbamate-based, or guanidine-based materials, etc.; antiozonants; processing aids; tackifiers; waxes; and the like.

In addition to the aforementioned essential composition components, an alkoxy polysiloxane may also be blended as a processing aid for silica. By blending such a processing aid, the viscosity of the rubber composition may be lowered, the scorch time may be prolonged, and furthermore, the vulcanization time may be shortened.

The resin composition of the present invention may contain other additive, such as a solvent, a surfactant, an antiseptic, a discoloration inhibitor, an antioxidant, a flame retardant, a light stabilizer, a non-surface-treated inorganic filling material, etc., if desired within a range where the gist of the present invention is not impaired.

The resin composition of the present invention may be prepared by mixing the aforementioned respective constituent components according to a known method. Examples thereof include a method of dry blending the resin with other component(s); a method of melt kneading the respective constituent components using an extruder; and the like.

By molding the resin composition of the present invention, a molded body which is not only high in mechanical strength but also excellent in hydrolysis resistance of the silane coupling agent layer may be obtained.

### Examples

The present invention is hereunder specifically described by reference to Examples, but it should be construed that the present invention is not limited to these Examples.

### <Reference Example>

### (Synthesis of 3-methyl-3-butenyl chloride)

A 1-L reactor equipped with a stirrer, a thermometer, and a dropping funnel was charged with 66.0 g (0.697 mol) of 3-methyl-3-buten-1-ol, 270 mL of diethylene glycol dibutyl ether, and 77.5 g (0.767 mol) of triethylamine in a nitrogen gas stream and cooled to an inner temperature of 5°C or lower while stirring. 91.2 g (0.767 mol) of thionyl chloride was added dropwise while keeping the inner temperature to 10°C or lower, and after completion of the dropwise addition, the temperature was raised to 65°C, and stirring under heating was conducted for 6 hours. After completion of the reaction, the inner temperature was cooled to 30°C or lower, 200 g of water was added to wash the reaction mixture to separate an organic phase. The organic phase was successively washed with 500 g of a 5% sodium hydrogen carbonate aqueous solution and subsequently 200 g of a saturated saline solution. The washed organic phase was distilled under reduced pressure to obtain 46.0 g (0.440 mol, yield: 63.1%) of 3-methyl-3-butenyl chloride.
¹H-NMR (400 MHz, CDCl₃, TMS) δ: 4.86 (s, 1H), 4.78 (s, 1H), 3.62 (t, J=7.2 Hz, 2H), 2.49 (t, 7.2 Hz, 1H), 1.76 (s, 3H)

### <Example 1>

### (Step 1: Synthesis of 4-chloro-2-methylbutyltrimethoxysilane)

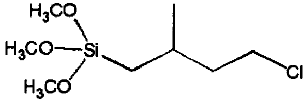

A 200-mL reactor equipped with a stirrer, a thermometer, and a dropping funnel was charged with 30.0 g (0.287 mol) of 3-methyl-3-butenyl chloride in a nitrogen gas stream, 15 mL of a solution of 154.6 mg (0.299 mmol) of H₂PtCl₆·6H₂O in tetrahydrofuran was added, and 58.3 g (0.430 mol) of trichlorosilane was then added dropwise, followed by stirring at 25°C for 20 hours. A separately prepared 1-L reactor equipped with a stirrer, a thermometer, and a dropping funnel was charged with 270 mL of methanol and 360 mL of triethylamine, and the foregoing reaction liquid was added dropwise at 5°C or lower while stirring. After the dropwise addition, stirring was continued at 25°C for 2 hours. The reaction liquid was concentrated, 200 mL of diisopropyl ether was added, and a precipitated salt was filtered. The filtrate was concentrated to obtain 33.7 g (0.149 mol, yield: 52%) of 4-chloro-2-methylbutyltrimethoxysilane.
¹H-NMR (400 MHz, CDCl₃, TMS) δ: 3.61-3.51 (m, 11H), 1.99-1.91 (m, 1H), 1.90-1.77 (m, 1H), 1.71-1.62 (m, 1H), 1.00 (d, J=6.4 Hz, 3H), 0.75 (dd, J=15.2, 5.2 Hz, 1H), 0.56 (dd, J=15.2, 8.4 Hz, 1H)

### (Step 2-1: Synthesis of 4-mercapto-2-methylbutyltrimethoxysilane)

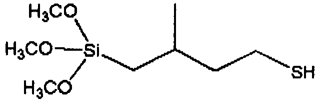

A reactor equipped with a stirrer, a thermometer, and a dropping funnel was charged with 123 mg (2.20 mmol) of NaSH which had been previously dried under reduced pressure and 1 mL of dimethylformamide in a nitrogen gas stream, followed by stirring at 25°C. 500 mg (2.20 mmol) of 4-chloro-2-methylbutyltrimethoxysilane was added dropwise at 25°C, followed by stirring at 25°C for 2 hours. After completion of the reaction, the reaction mixture was concentrated under reduced pressure to obtain 850 mg (net 469 mg, 2.09 mmol, yield: 95%) of 4-mercapto-2-methylbutyltrimethoxysilane.
¹H-NMR (400 MHz, CDCl₃, TMS) δ: 3.45 (s, 9H), 2.58-2.49 (2H, m), 1.90-1.82 (1H, m), 1.71-1.50 (2H, m), 1.33 (t, J=7.6 Hz, 1H), 0.98 (d, J=6.4 Hz, 3H), 0.79-0.71 (1H, m), 0.58-0.51 (m, 1H)

### <Example 2>

### (Step 2-2: Synthesis of 4,4'-bis(trimethoxysilyl-2-methylbutyl)tetrasulfide)

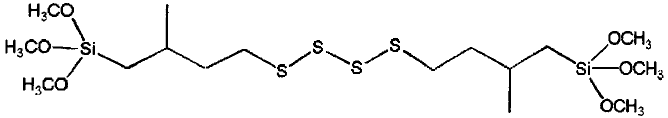

A reactor equipped with a stirrer, a thermometer, and a dropping funnel was charged with 516 mg (6.60 mmol) of Na₂S, 636 mg (19.8 mmol) of sulfur, and 6 mL of methanol in a nitrogen gas stream, followed by stirring under reflux for 5 hours. To the reaction liquid, 3.0 g (13.2 mmol) of 4-chloro-2-methylbutyltrimethoxysilane was added, and the contents were further stirred under reflux for 5 hours. After cooling, the reaction liquid was filtered, and the filtrate was concentrated under reduced pressure to obtain 1.8 g (3.5 mmol, yield: 54%) of 4,4'-bis(trimethoxysilyl-2-methylbutyl)tetrasulfide.
¹H-NMR (400 MHz, CDCl₃, TMS) δ: 3.56 (s, 9H), 3.06-2.93 (m, 2H), 1.89-1.62 (m, 3H), 1.03-0.99 (m, 3H), 0.79-0.68 (m, 1H), 0.62-0.53 (m, 1H)

### <Example 3>

A quartz plate having a size of 5-cm square and a thickness of 5 mm was dipped in concentrated hydrochloric acid, a deposit on the surface was removed, and the quartz plate was then washed with distilled water, followed by drying. This quartz plate was dipped in an ethanol/water (95/5, v/v) solution of 2.0 mol/L of 4-mercapto-2-methylbutyltrimethoxysilane at 25°C for 2 hours and then subjected to a heat treatment at 110°C for 3 hours by using an oven. Using this test piece, a contact angle against water and hydrolysis resistance were measured with FTA-188 (manufactured by First Ten Angstroms). The results are shown in Table 1.

### <Example 4>

A contact angle and hydrolysis resistance were judged in the same procedures as in Example 3, except that the 4,4'-bis(trimethoxysilyl-2-methylbutyl)tetrasulfide obtained in Example 2 was used in place of the 4-mercapto-2-methylbutyltrimethoxysilane. The results are shown in Table 1.

### <Comparative Example 1>

A contact angle and hydrolysis resistance were judged in the same procedures as in Example 3, except that 3-mercaptopropyltrimethoxysilane was used in place of the 4-mercapto-2-methylbutyltrimethoxysilane. The results are shown in Table 1.

### <Comparative Example 2>

A contact angle and hydrolysis resistance were judged in the same procedures as in Example 3, except that 3,3'-bis(trimethoxysilylpropyl)tetrasulfide was used in place of the 4-mercapto-2-methylbutyltrimethoxysilane. The results are shown in Table 1.

### (Hydrolysis Resistance)

Each of the test pieces prepared by the aforementioned methods in Examples 3 and 4 and Comparative Examples 1 and 2 was dipped in 50 mL of hot water at 100°C for 24 hours. After 24 hours, the organic content dissolved in water was measured by gas chromatography, and a total area of the detected material was expressed as an index while defining the value of Comparative Example 1 as 100 and shown in Table 1.

**Table 1**

| | Example 3 | Example 4 | Comparative Example 1 | Comparative Example 2 |
|---|---|---|---|---|
| Contact angle | 73(±1)° | 72(±1)° | 65(±2)° | 63(±2)° |
| Hydrolysis resistance | 60 | 55 | 100 | 90 |

It is noted from Table 1 that the organosilicon compound of the present invention is introduced onto the inorganic filling material without problems and is extremely excellent in the hydrolysis resistance as compared with conventionally used silane coupling agents.

### <Example 5>

110 parts by mass of an oil-extended emulsion polymerization styrene·butadiene rubber, "JSR 1723" (manufactured by JSR Corporation), 20 parts by mass of a natural rubber (RSS#3), 20 parts by mass of carbon black, "N234" (manufactured by Tokai Carbon Co., Ltd.), 50 parts by mass of silica, "Nipsil AQ" (manufactured by Nippon Silica Ind. Co., Ltd.), 4.0 parts by mass of the 4-mercapto-2-methylbutyltrimethoxysilane obtained in Example 1, 1 part by mass of stearic acid, and 1.0 part by mass of an anti-aging agent, "Nocrac 6C" (manufactured by Ouchi Shinko Chemical Industrial Co., Ltd.) were blended to prepare a master batch. To this, 3.0 parts by mass of zinc white, 0.5 parts by mass of a vulcanization accelerator DM (dibenzothiazyl disulfide), 1.0 part by mass of a vulcanization accelerator NS (N-t-butyl-2-benzothiazolyl sulfenamide), and 1.5 parts by mass of sulfur were added and kneaded to obtain a rubber composition.

### <Example 6>

A rubber composition was prepared in the same method as in Example 5, except that the 4,4'-bis(trimethoxysilyl-2-methylbutyl)tetrasulfide obtained in Example 2 was used in place of the 4-mercapto-2-methylbutyltrimethoxysilane.

### <Comparative Example 3>

A rubber composition was prepared in the same method as in Example 5, except that 3-mercaptopropyltrimethoxysilane was used in place of the 4-mercapto-2-methylbutyltrimethoxysilane.

### <Comparative Example 4>

A rubber composition was prepared in the same method as in Example 5, except that 3,3'-bis(trimethoxysilylpropyl)tetrasulfide was used in place of the 4-mercapto-2-methylbutyltrimethoxysilane.

The rubber compositions prepared in Examples 5 and 6 and Comparative Examples 3 and 4 were each evaluated with respect to rubber hardness, dynamic viscoelasticity, and abrasion resistance by the following methods.

### (Rubber Hardness)

A rubber hardness at a temperature of 20°C was measured using a type A durometer in conformity with JIS K6253-1:2012. An index when the value of Comparative Example 3 is defined as 100 is shown in Table 2. The higher this rubber hardness, the higher the strength of the rubber.

### (Dynamic Viscoelasticity)

Using a viscoelasticity measuring apparatus (manufactured by Rheology Co., Ltd.), a tanδ was measured under conditions of a dynamic tensile strain of 1% and a frequency of 1 Hz at 60°C. A sheet having a thickness of 0.2 cm and a width of 1.0 cm was used as a test piece, and a distance between used clamps was set to 2 cm. An index when the value of Comparative Example 3 is defined as 100 is shown in Table 2. The smaller the index value, the smaller the hysteresis loss.

### (Abrasion Resistance)

Using a DIN abrasion tester, the test was conducted at room temperature in conformity with JIS K6264-2:2005, to measure an abrasion amount. An index when the value of Comparative Example 3 is defined as 100 is shown in Table 2. The smaller the index value, the smaller the abrasion amount and the more excellent in abrasion resistance.

**Table 2**

| | Example 5 | Example 6 | Comparative Example 3 | Comparative Example 4 |
|---|---|---|---|---|
| Rubber hardness | 110 | 120 | 100 | 100 |
| tanδ | 98 | 98 | 100 | 98 |
| Abrasion resistance | 90 | 80 | 100 | 96 |

It is noted from Table 2 that in the case of using the organosilicon compound of the present invention, the rubber composition is high in the mechanical strength, small in the hysteresis loss, and excellent in the abrasion resistance, as compared with the case of using the conventionally used silane coupling agent. This may be considered to be caused due to the matter that by using the organosilicon compound of the present invention, the dispersibility of silica was improved.

### Industrial Applicability

The organosilicon compound of the present invention is useful as a silane coupling agent to be used for an inorganic filling material for the purpose of adding to a resin.

## Claims

1. An organosilicon compound represented by the following general formula (I): 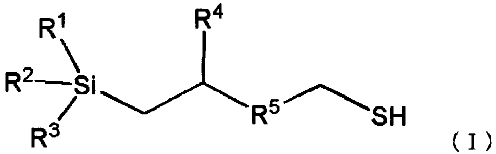
wherein R¹ to R³ each independently represent a chlorine atom, a methoxy group, or an ethoxy group;
R⁴ represents an alkyl group having 1 to 10 carbon atoms, such as a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a n-heptyl group, a n-octyl group, a 2-ethylhexyl group, a cyclopropyl group, a cyclobutyl group, a cyclopentyl group, a cyclohexyl group, a cycloheptanyl group, and a cyclooctanyl group; and
R⁵ represents an alkylene group having 1 to 10 carbon atoms, such as a methylene group, an ethane-1,1-diyl group, an ethane-1,2-diyl group, a propane-1,1-diyl group, a propane-1,2-diyl group, a propane-1,3-diyl group, a pentane-1,5-diyl group, a hexane-1,6-diyl group, and a cyclohexane-1,4-diyl group.

2. An organosilicon compound represented by the following general formula (II): 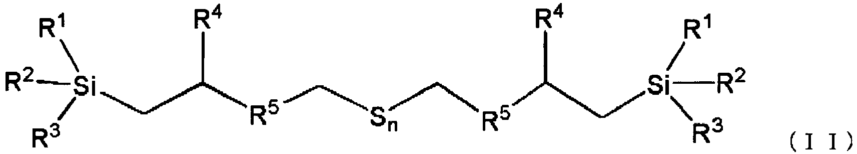
wherein R¹ to R³ each independently represent a chlorine atom, a methoxy group, or an ethoxy group;
R⁴ represents an alkyl group having 1 to 10 carbon atoms, such as a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a n-heptyl group, a n-octyl group, a 2-ethylhexyl group, a cyclopropyl group, a cyclobutyl group, a cyclopentyl group, a cyclohexyl group, a cycloheptanyl group, and a cyclooctanyl group;
R⁵ represents an alkylene group having 1 to 10 carbon atoms, such as a methylene group, an ethane-1,1-diyl group, an ethane-1,2-diyl group, a propane-1,1-diyl group, a propane-1,2-diyl group, a propane-1,3-diyl group, a pentane-1,5-diyl group, a hexane-1,6-diyl group, and a cyclohexane-1,4-diyl group; and
n represents an integer of 2 to 6.

3. An organosilicon compound represented by the following general formula (III): 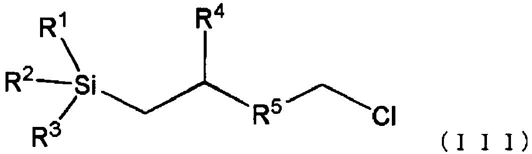
wherein R¹ to R³ each independently represent a chlorine atom, a methoxy group, or an ethoxy group;
R⁴ represents an alkyl group having 1 to 10 carbon atoms, such as a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a n-heptyl group, a n-octyl group, a 2-ethylhexyl group, a cyclopropyl group, a cyclobutyl group, a cyclopentyl group, a cyclohexyl group, a cycloheptanyl group, and a cyclooctanyl group; and
R⁵ represents an alkylene group having 1 to 10 carbon atoms, such as a methylene group, an ethane-1,1-diyl group, an ethane-1,2-diyl group, a propane-1,1-diyl group, a propane-1,2-diyl group, a propane-1,3-diyl group, a pentane-1,5-diyl group, a hexane-1,6-diyl group, and a cyclohexane-1,4-diyl group.

4. A resin composition comprising an inorganic filling material which is subjected to a surface treatment with the organosilicon compound according to claim 1 or 2.

## Patentansprüche

1. Organosiliciumverbindung, dargestellt durch die folgende allgemeine Formel (I): 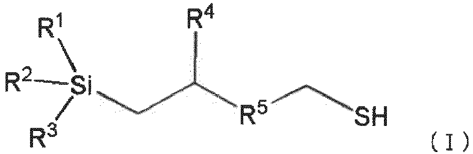
wobei R¹ bis R³ jeweils unabhängig voneinander ein Chloratom, eine MethoxyGruppe oder eine Ethoxy-Gruppe darstellen,
R⁴ eine Alkyl-Gruppe mit 1 bis 10 Kohlenstoffatomen darstellt, wie eine MethylGruppe, eine Ethyl-Gruppe, eine *n*-Propyl-Gruppe, eine *iso*-Propyl-Gruppe, eine *n*-Butyl-Gruppe, eine *iso*-Butyl-Gruppe, eine *sec*-Butyl-Gruppe, eine *tert-*Butyl-Gruppe, eine *n*-Pentyl-Gruppe, eine *iso*-Pentyl-Gruppe, eine *neo*-Pentyl-Gruppe, eine *n*-Hexyl-Gruppe, eine *n*-Heptyl-Gruppe, eine *n*-Octyl-Gruppe, eine 2-Ethylhexyl-Gruppe, eine *cyclo*-Propyl-Gruppe, eine *cyclo*-Butyl-Gruppe, eine *cyclo*-Pentyl-Gruppe, eine *cyclo*-Hexyl-Gruppe, eine *cyclo*-Heptanyl-Gruppe und eine *cyclo*-Octanyl-Gruppe, und
R⁵ eine Alkylen-Gruppe mit 1 bis 10 Kohlenstoffatomen darstellt, wie eine Methylen-Gruppe, eine Ethan-1,1-diyl-Gruppe, eine Ethan-1,2-diyl-Gruppe, eine Propan-1,1-diyl-Gruppe, eine Propan-1,2-diyl-Gruppe, eine Propan-1,3-diyl-Gruppe, eine Pentan-1,5-diyl-Gruppe, eine Hexan-1,6-diyl-Gruppe und eine *cyclo*-Hexan-1,4-diyl-Gruppe.

2. Organosiliciumverbindung, dargestellt durch die folgende allgemeine Formel (II): 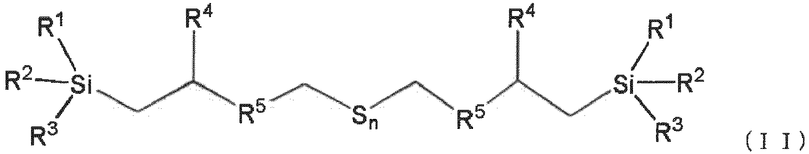
wobei R¹ bis R³ jeweils unabhängig voneinander ein Chloratom, eine MethoxyGruppe oder eine Ethoxy-Gruppe darstellen,
R⁴ eine Alkyl-Gruppe mit 1 bis 10 Kohlenstoffatomen darstellt, wie eine MethylGruppe, eine Ethyl-Gruppe, eine *n*-Propyl-Gruppe, eine *iso*-Propyl-Gruppe, eine *n*-Butyl-Gruppe, eine *iso*-Butyl-Gruppe, eine *sec*-Butyl-Gruppe, eine *tert-*Butyl-Gruppe, eine *n*-Pentyl-Gruppe, eine *iso*-Pentyl-Gruppe, eine *neo*-Pentyl-Gruppe, eine *n*-Hexyl-Gruppe, eine *n*-Heptyl-Gruppe, eine *n*-Octyl-Gruppe, eine 2-Ethylhexyl-Gruppe, eine *cyclo*-Propyl-Gruppe, eine *cyclo*-Butyl-Gruppe, eine *cyclo*-Pentyl-Gruppe, eine cyclo-Hexyl-Gruppe, eine *cyclo*-Heptanyl-Gruppe und eine cyclo-Octanyl-Gruppe,
R⁵ eine Alkylen-Gruppe mit 1 bis 10 Kohlenstoffatomen darstellt, wie eine Methylen-Gruppe, eine Ethan-1,1-diyl-Gruppe, eine Ethan-1,2-diyl-Gruppe, eine Propan-1,1-diyl-Gruppe, eine Propan-1,2-diyl-Gruppe, eine Propan-1,3-diyl-Gruppe, eine Pentan-1,5-diyl-Gruppe, eine Hexan-1,6-diyl-Gruppe und eine *cyclo*-Hexan-1,4-diyl-Gruppe, und
n eine ganze Zahl von 2 bis 6 darstellt.

3. Organosiliciumverbindung, dargestellt durch die folgende allgemeine Formel (III): 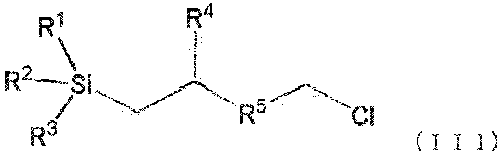
wobei R¹ bis R³ jeweils unabhängig voneinander ein Chloratom, eine MethoxyGruppe oder eine Ethoxy-Gruppe darstellen,
R⁴ eine Alkyl-Gruppe mit 1 bis 10 Kohlenstoffatomen darstellt, wie eine MethylGruppe, eine Ethyl-Gruppe, eine *n*-Propyl-Gruppe, eine *iso*-Propyl-Gruppe, eine n-Butyl-Gruppe, eine *iso*-Butyl-Gruppe, eine sec-Butyl-Gruppe, eine *tert-*Butyl-Gruppe, eine *n*-Pentyl-Gruppe, eine *iso*-Pentyl-Gruppe, eine *neo*-Pentyl-Gruppe, eine *n*-Hexyl-Gruppe, eine *n*-Heptyl-Gruppe, eine *n*-Octyl-Gruppe, eine 2-Ethylhexyl-Gruppe, eine cyclo-Propyl-Gruppe, eine *cyclo*-Butyl-Gruppe, eine cyclo-Pentyl-Gruppe, eine *cyclo*-Hexyl-Gruppe, eine *cyclo*-Heptanyl-Gruppe und eine *cyclo*-Octanyl-Gruppe, und
R⁵ eine Alkylen-Gruppe mit 1 bis 10 Kohlenstoffatomen darstellt, wie eine Methylen-Gruppe, eine Ethan-1,1-diyl-Gruppe, eine Ethan-1,2-diyl-Gruppe, eine Propan-1,1-diyl-Gruppe, eine Propan-1,2-diyl-Gruppe, eine Propan-1,3-diyl-Gruppe, eine Pentan-1,5-diyl-Gruppe, eine Hexan-1,6-diyl-Gruppe und eine *cy*clo-Hexan-1,4-diyl-Gruppe.

4. Harzzusammensetzung, umfassend ein anorganisches Füllmaterial, das einer Oberflächenbehandlung mit der Organosiliciumverbindung nach Anspruch 1 oder 2 unterzogen ist.

## Revendications

1. Composé d'organosilicium représenté par la formule générale suivante (I) : 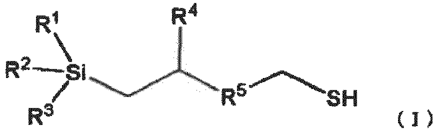
dans lequel R¹ à R³ représentent chacun indépendamment un atome de chlore, un groupe méthoxy ou un groupe éthoxy ;
R⁴ représente un groupe alkyle avec 1 à 10 atomes de carbone, tel qu'un groupe méthyle, un groupe éthyle, un groupe n-propyle, un groupe isopropyle, un groupe n-butyle, un groupe isobutyle, un groupe sec-butyle, un groupe tert-butyle, un groupe n-pentyle, un groupe isopentyle, un groupe néopentyle, un groupe n-hexyle, un groupe n-heptyle, un groupe n-octyle, un groupe 2-éthylhexyle, un groupe cyclopropyle, un groupe cyclobutyle, un groupe cyclopentyle, un groupe cyclohexyle, un groupe cycloheptanyle et un groupe cyclooctanyle ; et
R⁵ représente un groupe alkylène avec 1 à 10 atomes de carbone, tel qu'un groupe méthylène, un groupe éthane-1,1-diyle, un groupe éthane-1,2-diyle, un groupe propane-1,1-diyle, un groupe propane-1,2-diyle, un groupe propane-1,3-diyle, un groupe pentane-1,5-diyle, un groupe hexane-1,6-diyle et un groupe cyclohexane-1,4-diyle.

2. Composé d'organosilicium représenté par la formule générale (II) suivante : 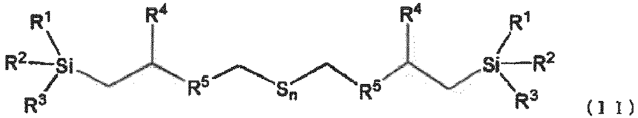
dans lequel R¹ à R³ représentent chacun indépendamment un atome de chlore, un groupe méthoxy ou un groupe éthoxy;
R⁴ représente un groupe alkyle avec 1 à 10 atomes de carbone, tel qu'un groupe méthyle, un groupe éthyle, un groupe n-propyle, un groupe isopropyle, un groupe n-butyle, un groupe isobutyle, un groupe sec-butyle, un groupe tert-butyle, un groupe n-pentyle, un groupe isopentyle, un groupe néopentyle, un groupe n-hexyle, un groupe n-heptyle, un groupe n-octyle, un groupe 2-éthylhexyle, un groupe cyclopropyle, un groupe cyclobutyle, un groupe cyclopentyle, un groupe cyclohexyle, un groupe cycloheptanyle et un groupe cyclooctanyle ;
R⁵ représente un groupe alkylène avec 1 à 10 atomes de carbone, tel qu'un groupe méthylène, un groupe éthane-1,1-diyle, un groupe éthane-1,2-diyle, un groupe propane-1,1-diyle, un groupe propane-1,2-diyle, un groupe propane-1,3-diyle, un groupe pentane-1,5-idyle, un groupe hexane-1,6-diyle et un groupe cyclohexane-1,4-diyle ; et n représente un nombre entier de 2 à 6.

3. Composé d'organosilicium représenté par la formule générale suivante (III) : 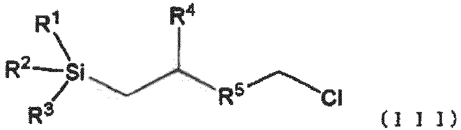
dans lequel R¹ à R³ représentent chacun indépendamment un atome de chlore, un groupe méthoxy ou un groupe éthoxy ;
R⁴ représente un groupe alkyle avec 1 à 10 atomes de carbone, tel qu'un groupe méthyle, un groupe éthyle, un groupe n-propyle, un groupe isopropyle, un groupe n-butyle, un groupe isobutyle, un groupe sec-butyle, un groupe tert-butyle, un groupe n-pentyle, un groupe isopentyle, un groupe néopentyle, un groupe n-hexyle, un groupe n-heptyle, un groupe n-octyle, un groupe 2-éthylhexyle, un groupe cyclopropyle, un groupe cyclobutyle, un groupe cyclopentyle, un groupe cyclohexyle, un groupe cycloheptanyle et un groupe cyclooctanyle ; et
R⁵ représente un groupe alkylène avec 1 à 10 atomes de carbone, tel qu'un groupe méthylène, un groupe éthane-1,1-diyle, un groupe éthane-1,2-diyle, un groupe propane-1,1-diyle, un groupe propane-1,2-diyle, un groupe propane-1,3-diyle, un groupe pentane-1,5-diyle, un groupe hexane-1,6-diyle et un groupe cyclohexane-1,4-diyle.

4. Composition de résine comprenant un matériau de remplissage inorganique qui est soumis à un traitement de surface avec le composé d'organosilicium selon la revendication 1 ou 2.
